# EUROPÄISCHE PATENTSCHRIFT

(11) **EP 2 589 899 B1**
(45) Veröffentlichungstag und Bekanntmachung des Hinweises auf die Patenterteilung: **23.10.2019**
(21) Anmeldenummer: 11187670.2
(22) Anmeldetag: 03.11.2011
(51) Int. Cl.: F25B 41/06

(54) **Verfahren zur Erhöhung der Ventilkapazität einer Kältemaschine**
Method for increasing the valve capacity of a cooling machine
Procédé d'augmentation de la capacité de ventilation d'une machine frigorifique

(43) Veröffentlichungstag der Anmeldung: 08.05.2013
(73) Patentinhaber: Siemens Schweiz AG, 8047 Zürich (CH)
(72) Erfinder: Jekimow, Alexander, 6330 Cham (CH); Petry, Karl-Heinz, 8808 Pfäffikon (CH); Tramaglino, Giuseppe, 8862 Schübelbach (CH)
(74) Vertreter: Maier, Daniel Oliver

(56) Entgegenhaltungen:
- EP-A2- 0 148 108
- WO-A2-2008/036079
- DE-A1- 1 935 834
- US-B1- 6 324 856

## Beschreibung

### Technisches Gebiet

Die vorliegende Erfindung betrifft, ein System zur Zuführung eines Fluids zu einem Verdampfer einer Kältemaschine sowie ein Verfahren zur Zuführung eines Fluids zu einem Verdampfer einer Kältemaschine.

### Hintergrund der Erfindung

Bei kältetechnischen Anlagen mit einer großen Kälteleistung werden entsprechend große Expansionsventile eingesetzt. Mittels eines Expansionsventils wird ein flüssiges Kältemittel entspannt und einem sogenannten Verdampfer weitergeleitet. Große Expansionsventile ermöglichen die Steuerung eines großen Massenstroms des Kältemittels, um mit der Kältemaschine einen Leistungsbereich von mehr als 1 MW zu erzielen. Solche großen Expansionsventile sind technisch aufwendig und kostenintensiv herstellbar.

Um kleinere Expansionsventils einsetzen zu können ohne die Kälteleistung der kältetechnischen Anlage zu reduzieren, werden mehrere Expansionsventile parallel vor dem Verdampfer geschaltet. Die parallel geschalteten Expansionsventile laufen entweder synchron oder werden unabhängig voneinander einzeln gesteuert. Die einzelne Steuerung ist aufwendig. Ferner steigt mit der erhöhten Steuerkomplexität die Ausfallwahrscheinlichkeit. Darüber hinaus ist der Einsatz mehrerer Expansionsventile sehr teuer.

Diese Themen werden insbesondere in WO2008036079A2 angesprochen. Daraus ist es bekannt, ein Fluid zu einem verdampfer einer Kältemaschine über ein kleineres und somit kostengünstigeres Expansionsventil mit einem stetig änderbaren Strömungsquerschnitt zuzuführen, sowie dank einem diskret schaltbaren Absperrorgan bedarfsweise ergänzend oder alternativ über eine Drossel, WO2008036079A2 zeigt eine Steuereinheit für das Expansionsventil mit einem stetig änderbaren Strömungsquerschnitt, welche den Ventilstand aufgrund von Messung der Temperatur, des Drucks oder der Überhitzungswärme des Fluiden regelt. Das Dokument zeigt nicht, wie das Absperrorgan zu regeln ist, und insbesondere nicht wie eine Steuereinheit für dessen robuste, effiziente und exakte Regelung sich von der Steuereinheit für die Expansionsventile mit einem stetig änderbaren Strömungsquerschnitt unterscheidet.

### Darstellung der Erfindung

Der Erfindung liegt die Aufgabe zugrunde, eine robuste und kostengünstige Regelung für eine Kältemaschine bereitzustellen.

Die Aufgabe wird durch ein System zur Zuführung eines Fluids zu einem Verdampfer einer Kältemaschine und durch ein Verfahren zur Zuführung eines Fluids zu einem Verdampfer einer Kältemaschine gemäß den unabhängigen Ansprüchen gelöst. Vorteilhafte Ausführungsformen der vorliegenden Erfindung sind in den abhängigen Ansprüchen beschrieben.

Gemäß einem ersten Aspekt wird ein System zur Zuführung eines Fluids zu einem Verdampfer einer Kältemaschine beschrieben. Das System weist eine erste Leitung, welche an einem Fluideingang des Verdampfers anschließbar ist, und eine zweite Leitung, welche an dem Fluideingang des Verdampfers anschließbar ist, auf. Ferner weist das System ein Expansionsventil mit einem stetig änderbaren Strömungsquerschnitt auf. Das Expansionsventil ist in der ersten Leitung derart angeordnet, dass mittels des stetig änderbaren ersten Strömungsquerschnitts ein erster Massenstrom des Fluids durch die erste Leitung stetig einstellbar ist.

Ferner weist das System eine Steuereinheit auf, welche derart eingerichtet ist, dass eine stetige Änderung des ersten Strömungsquerschnitts des Expansionsventils steuerbar ist und dass in Abhängigkeit des ersten Strömungsquerschnitts oder des erforderlichen Gesamtströmungsquerschnitts (der ersten und der zweiten Leitung) das Absperrorgan steuerbar ist.

Gemäß einem weiteren Aspekt wird ein Verfahren zur Durchführung eines Fluids zu einem Verdampfer einer Kältemaschine beschrieben. Gemäß dem Verfahren wird ein erster Massenstrom des Fluids in einer ersten Leitung gesteuert. Die erste Leitung ist an einem Fluideingang des Verdampfers angeschlossen. Der erste Massenstrom wird mittels stetigen Änderns eines ersten Strömungsquerschnitts eines Expansionsventils gesteuert, welches in der ersten Leitung angeordnet ist.

Ferner wird gemäß dem Verfahren ein Absperrorgan gesteuert, welcher in einer zweiten, an dem Fluideingang gekoppelten Leitung angeordnet ist, derart, dass in einer Öffnungsstellung des Absperrorgans ein zweiter Massenstrom des Fluids durch die zweite Leitung strömt und in einer Schließstellung ein Fluidstrom durch die zweite Leitung unterbunden ist. Eine Drossel ist mit einem konstanten zweiten Strömungsquerschnitt in der zweiten Leitung derart angeordnet, dass der zweite Massenstrom bei Öffnungsstellung des Absperrorgans durch den zweiten Strömungsquerschnitt strömt.

Das Absperrorgan wird in Abhängigkeit des ersten Strömungsquerschnitts des Expansionsventils oder des erforderlichen Gesamtströmungsquerschnitts (der ersten und der zweiten Leitung) gesteuert.

Ein Verdampfer einer Kältemaschine wird insbesondere bei Kompressionskältemaschinen eingesetzt. Eine solche Kompressionskältemaschine ist eine Kältemaschine, die den physikalischen Effekt der Verdampfungswärme des Fluids (Kältemittels) bei Wechsel des Aggregatszustands von flüssig zu gasförmig nutzt. Ein Kältemittel, das in einem geschlossenen Kreislauf bewegt wird, erfährt nacheinander verschiedene Aggregatszustandsänderungen, insbesondere zwischen den Aggregatszuständen flüssig und gasförmig.

Eine Kompressionskältemaschine weist zumindest eine Drossel, einen Kondensator (Verflüssiger), einen Drosselbereich und den Verdampfer auf. Ein gasförmiges Kältemittel (Fluid) wird in einer Kompressionskältemaschine zunächst durch einen Kompressor angesaugt und verdichtet. In dem nachgeschalteten Verflüssiger kondensiert (verflüssigt) das Fluid unter Wärmeabgabe und wärmt beispielsweise die Umgebung. Anschließend wird das flüssige Kältemittel aufgrund der Druckänderung in dem anschließenden Drosselbereich entspannt. In dem nachgeschalteten Verdampfer verdampft das Kältemittel unter Wärmeaufnahme bei niedriger Temperatur (sogenannte Siedekühlung). Durch die Wärmeaufnahme des Kältemittels im Verdampfer wird eine Kühlwirkung der Umgebung des Verdampfers erzielt. Anschließend wird beispielsweise das verdampfte und gasförmige Kältemittel erneut dem Kompressor zugeführt.

Der Verdampfer kann beispielsweise ein sogenannter überfluteter Verdampfer oder ein Verdampfer mit Kältemitteleinspritzung bzw. Trockenexpansion sein. Bei einem Verdampfer mit Trockenexpansion wird vor dem Fluideingang das Fluid in dem Drosselbereich vorbereitet, so dass die Zustandsparameter (z.B. Temperatur, Druck, Massenstrom) des Fluids derart eingestellt sind, dass an dem Fluidausgang des Verdampfers das Kältemittel vollständig verdampft ist und in einem überhitzten Zustand vorliegt. Am Fluideingang kann das Kältemittel flüssig, teilweise verdampft (gasförmig mit Tröpfchen) oder verdampft (gasförmig) vorliegen. Das System bzw. das Verfahren eignet sich insbesondere für Trockenexpansion, da die Trockenexpansion hohe Anforderungen an Überhitzungsregelung stellt. Die Regelung der Überhitzung bei Trockenexpansion ist aufwendiger und anspruchsvoller, womit ein schnelles/übergangsloses Umschalten erforderlich wird.

Die Zustandsparameter des Fluids bzw. des Kältemittels müssen zudem vor Eintritt in den Verdampfer derart eingestellt werden, dass im Verdampfer genügend Kälteleistung (Wärmeaufnahme durch das Kältemittel) erzeugt wird und das am Fluidausgang des Verdampfers das Kältemittel möglichst in einem gasförmigen bzw. überhitzten gasförmigen Zustand vorliegt. Liegt das Kältemittel am Fluidausgang des Verdampfers nicht in einem gasförmigen, insbesondere überhitzten gasförmigen Zustand vor, so können in einem nachfolgenden Verdichter die in dem Dampf befindlichen Tröpfchen dem Verdichter schaden. Ferner ist es energetisch günstig, das Kältemittel in dem Verdampfer bis zu einem gasförmigen bzw. überhitzten gasförmigen Zustand zu verdampfen. Daher ist es notwendig, mittels der Drosseleinrichtung die Zustandsparameter des Kältemittels am Fluidausgang des Verdampfers einzustellen. Die Zustandsparameter des Kältemittels sind beispielsweise die Temperatur, der Druck, der Aggregatszustand und der Massenstrom des Fluids.

Gemäß der vorliegenden Erfindung werden die Zustandsparameter des Fluids (Kältemittels) am Fluidausgang und/oder am Fluideingang des Verdampfers mittels des Expansionsventils in der ersten Leitung und mittels der parallel geschalteten zweiten Leitung mit dem Absperrorgan und der Drossel (insbesondere durch Expansion) eingestellt.

Das Expansionsventil weist einen stetig änderbaren Öffnungsquerschnitt auf und kann somit als sog. "Stetigventil" bezeichnet werden. Ein Stetigventil ist insbesondere elektrisch ansteuerbar und kann einen stetigen Übergang einzelner Schaltstellungen und somit einzelner erster Strömungsquerschnitte in dem Expansionsventil zulassen, um somit den ersten Strömungsquerschnitt kontinuierlich zu verändern. Aufgrund der stetigen Änderung des ersten Strömungsquerschnitts kann ein erster Massenstrom bzw. Volumenstrom des Fluids, welcher durch die erste Leitung strömt, exakt und stetig eingestellt werden. Das Expansionsventil ist beispielsweise ein Proportionalventil, bei welchem ein Proportionalmagnet einen stetigen Übergang der Ventilöffnung ermöglicht, oder ein Regelventil mit einer linearen Volumenstrom-Kennlinie und Null-Überdeckung der Ventilsteuerkanten. Das Expansionsventil kann ebenfalls als Servoventil ausgebildet sein, welches beispielsweise analog ansteuerbar ist und somit z.B. eine lineare oder gleichprozentige stetige Öffnungskennlinie aufweist.

Das Expansionsventil kann beispielsweise ein Magnetventil mit einer Wegerfassungseinrichtung des Ventilkolbens bzw. des verstellbaren Ventilelements sein, so dass die Wegerfassungseinrichtung den ersten Strömungsquerschnitt aufgrund der Kenntniss der Ventilstellung bestimmen kann.

Gemäß einer weiteren beispielhaften Ausführungsform ist das Expansionsventil ein elektromechanisch ausgebildetes Ventil. Das elektromechanisch stetig einstellbare Expansionsventil kann beispielsweise ein Magnetventil, ein Piezoventil, ein induktionsgesteuertes und/oder ein motorisiertes Ventil sein.

Unter dem Begriff "Absperrorgan" wird im Folgenden ein diskret und unstetig schaltbares Ventil (z.B. ein Absperrhahn) bezeichnet, welches einen Fluidstrom in der zweiten Rohrleitung in der Öffnungsstellung freigibt oder sperrt, ohne dass Zwischenöffnungsstellungen möglich sind. Diskret bedeutet beispielsweise, dass das Absperrorgan zwischen seiner Öffnungsstellung und seiner Schließstellung keine einstellbaren Zwischenstellungen aufweist. Im Gegensatz zum stetig einstellbaren ersten Strömungsquerschnitt des Expansionsventils weist das Absperrorgan in der Öffnungsstellung einen maximalen Strömungsquerschnitt auf, so dass der zweite Massenstrom des Fluids hindurchströmt. In der Schließstellung des Absperrorgans ist kein Strömungsquerschnitt vorhanden, so dass kein Fluid durch die zweite Leitung strömt.

Das Absperrorgan kann beispielsweise als diskret schaltbares Magnetventil ausgebildet sein. Ein Magnetventil wird mittels eines Elektromagneten betätigt, welcher beispielsweise durch die Steuereinheit steuerbar ist. Magnetventile weisen sehr schnelle Schaltzeiten auf im Vergleich zu mechanisch gesteuerten Ventilen.

Stromabwärts oder auch stromaufwärts des Absperrorgans ist die Drossel mit einem konstanten zweiten Querschnitt angeordnet, durch welchen das Fluid mit dem zweiten Massenstrom bei Öffnungsstellung des Absperrorgans strömt. Das Absperrorgan kann auch eine konstante Drossel integral beinhalten und als Magnetventil ausgebildet sein. Somit werden beide Funktionen, nämlich die Drosselfunktion und die Absperrfunktion, vereint. Eine weitere Drossel ist beispielsweise nicht zusätzlich notwendig. Diese beiden Funktionen können entsprechend durch ein einziges Bauteil gelöst werden.

Ferner kann das Absperrorgan als Magnetventil mit integrierter konstanter Drossel ausgebildet sein. Die Leistungsregelung erfolgt z.B. durch Pulsweitenmodulation. Solch ein Ventil wird diskret 0% oder 100% geöffnet und durch eine Variation der Schließ- bzw. Öffnungszeit kann der Massenstrom diskret geregelt werden. Somit kann auch ein solches Ventil die Aufgabe von Absperrorgan und Drossel übernehmen, indem es nicht in Pulsweitenmodulation betrieben wird sondern einfach zu oder abgeschaltet wird.

Das Expansionsventil und die Drossel bilden mit ihren jeweiligen ersten und zweiten Strömungsquerschnitt jeweils eine lokale Verengung der ersten Leitung bzw. der zweiten Leitung. Damit wird der Druck des durchfließenden ersten Massenstroms und des zweiten Massenstroms des Fluids vermindert und eine Expansion des Fluids bewirkt, wobei keine bzw. kaum Wärme abgeführt wird.

Am Fluideingang des Verdampfers wird über die Drossel und über das Expansionsventil das Fluid in einen gasförmigen oder in einen nassdampfförmigen Zustand bereitgestellt.

Die Steuereinheit gemäß der vorliegenden Erfindung steuert die stetige Änderung des ersten Strömungsquerschnitts des Expansionsventils. Ferner steuert die Steuereinheit in Abhängigkeit des ersten Strömungsquerschnitts des Expansionsventils und/oder in Abhängigkeit vom erforderlichen Gesamtströmungsquerschnitt das Absperrorgan (Öffnungsstellung<->Schließstellung).

Das stetig steuerbare Expansionsventil zeichnet sich durch eine schnelle Stellgeschwindigkeit, eine hohe Positioniergenauigkeit und eine exakte Stellungsrückmeldung (z.B. aufgrund einer integrierten Wegerfassungseinrichtung) aus.

Das Expansionsventil weist eine konstruktiv bedingte Ventilkennlinie auf. Die Ventilkennlinie enthält Informationen darüber, bei welchem Ventilöffnungsgrad (z.B. dem Ventilhub) bzw. bei welchem Strömungsquerschnitt, welcher KV-Wert (Fluiddurchsatz) ermöglicht wird.

Der KV-Wert wird auch als Durchflussfaktor oder als Durchflusskoeffizient bezeichnet. Er ist ein Maß für den erzielbaren Durchsatz des Fluids durch ein Ventil und dient zur Auswahl und Dimensionierung von Ventilen. Der KV-Wert wird z.B. in der Einheit m³/h (Kubikmeter/Stunde) angegeben.

Zudem ist der KV-Wert der Drossel bekannt. Die Steuereinheit ermittelt den Bedarf an einem Gesamtmassenstrom des Fluids am Fluideingang des Verdampfers. Um eine noch exaktere Einstellung des Gesamtmassenstroms zu erzielen, ist die Steuereinheit mit einer Sensoreinrichtung verbunden, um zusätzlich weitere Zustandsparameter des Fluids am Fluideingang und/oder am Fluidausgang zu erhalten, welche in die Berechnung bzw. Bestimmung des KV-Werts einfließen, um exakter die Ventilöffnungsgrade bzw. den ersten Strömungsquerschnitt des Expansionsventils und den Schaltpunkt des Absperrorgans einzustellen. Abhängig von dem Bedarf an Gesamtmassenstrom am Fluideingang steuert die Steuereinheit das diskret schaltbare Absperrorgan und das stetig änderbare Expansionsventil. Da die Steuereinheit den aktuellen ersten Strömungsquerschnitt und den zweiten Strömungsquerschnitt einschließlich der zugehörigen KV-Werte kennt, kann die Steuereinheit basierend darauf den gewünschten ersten Massenstrom und den gewünschten zweiten Massenstrom einstellen. Abhängig von dem ersten Strömungsquerschnitt und dem zweiten Strömungsquerschnitt und unter Kenntnis des KV-Werts des Expansionsventils und der Drossel kann die Steuereinheit einen gewünschten ersten Massenstrom und einen gewünschten zweiten Massenstrom einstellen, um den gewünschten Gesamtmassenstrom an dem Fluideingang des Verdampfers zu erreichen.

Mittels der vorliegenden Erfindung kann äußerst effizient und exakt ein hoher Gesamtmassenstrom des Fluids (Kältemittels) am Fluideingang des Verdampfers eingestellt werden, ohne dass große und teure stetig einstellbare Expansionsventile zum Einsatz kommen müssen. Gemäß der vorliegenden Erfindung wird die erste Leitung zu der zweiten Leitung parallel geschaltet und in einem Knotenpunkt an einem Fluideingang des Verdampfers gekoppelt.

Wird wenig Kühlleistung des Verdampfers gefordert, ist das Absperrorgan in Schließstellung und das Fluid strömt ausschließlich durch die erste Leitung und somit durch das Expansionsventil. Bei steigender geforderter Kühlleistung steuert die Steuereinheit das Expansionsventil derart, dass sich der erste Strömungsquerschnitt stetig (d.h. linear oder mit kleinen Zwischenschritten) vergrößert, so dass sich ebenfalls der erste Massenstrom, welcher durch den ersten Strömungsquerschnitt strömt, erhöht.

Wird eine erste vorgegebene Querschnittsgröße (beispielsweise die Maximalgröße) des ersten Strömungsquerschnitts erreicht, steuert die Steuereinheit das Absperrorgan derart, dass dieses in die Öffnungsstellung verstellt wird, so dass der zweite Massenstrom des Fluids zu dem Fluideingang strömt. Gleichzeitig bzw. mit einer Vor- oder Nachhaltezeit von z.B. ca. 0,01 bis ca. 1,5 Sekunden reduziert die Steuereinheit den ersten Strömungsquerschnitt des Expansionsventils derart, dass der erste Massenstrom um den zweiten Massenstrom reduziert wird, so dass am Fluideingang der Gesamtmassenstrom vor Verstellen des Absperrorgans in Öffnungsstellung und nach Verstellen des Absperrorgans in Öffnungsstellung konstant bleibt. Befindet sich das Absperrorgan in Schließstellung, so ist der Gesamtmassenstrom ausschließlich durch den ersten Massenstrom definiert. Ist das Absperrorgan in Öffnungsstellung, so wird der Gesamtmassenstrom am Fluideingang durch die Summe aus dem ersten Massenstrom und dem zweiten Massenstrom gebildet.

Nach Öffnung des Absperrorgans strömt das Fluid mit einem zweiten Massenstrom durch die zweite Leitung und somit durch die Drossel, welche einen konstanten zweiten Strömungsquerschnitt aufweist. Ist das Absperrorgan bereits in der Öffnungsstellung und wird eine weitere Ventilleistung (z.B. ein höherer Durchfluss-/Strömungsquerschnitt) gefordert, steuert die Steuereinheit das Expansionsventil derart, dass sich der erste Strömungsquerschnitt wieder stetig öffnet, so dass sich der erste Massenstrom erhöht bis die geforderte Kälteleistung im Verdampfer erzielt wird.

Sinkt die geforderte Kälteleistung, so reduziert die Steuereinheit den ersten Strömungsquerschnitt stetig und somit den ersten Massenstrom. Erreicht der erste Strömungsquerschnitt des Expansionsventils eine vorgebbare zweite (minimale) Querschnittsgröße, so steuert die Steuereinheit das Absperrorgan in Schließstellung und erhöht gleichzeitig bzw. mit einer Vor- oder Nachhaltezeit von z.B. ca. 0,01 bis ca. 1,5 Sekunden den ersten Strömungsquerschnitt derart, dass der Gesamtmassenstrom am Fluideingang des Verdampfers während des Umschaltens des Absperrorgans konstant bleibt. Bei einer weiteren Reduzierung der geforderten Kälteleistung im Verdampfer reduziert die Steuereinheit wiederum den ersten Strömungsquerschnitt stetig.

Durch den Einsatz von schnell schaltbaren Ventilen (Absperrorgan, Expansionsventil), durch einen optimierten Schaltalgorithmus der Steuereinheit und durch die Trägheit der Regelstrecke des Fluids bleibt der Gesamtmassenstrom am Fluideingang des Verdampfers während eines Schaltvorgangs des Absperrorgans und des Expansionsventils nahezu konstant.

Mit der vorliegenden Erfindung können anstatt mehrerer oder größerer stetig änderbaren Expansionsventilen kleinere und ausfallsichere Expansionsventile eingesetzt werden, ohne die Gesamtkühlleistung einer Kältemaschine zu begrenzen. Die benötigte höhere Kühlleistung der Kältemaschine wird über eine diskrete Zuschaltung eines zweiten Massenstroms und einer gleichzeitigen Reduzierung des ersten Strömungsquerschnitts des Expansionsventils erzielt. Die technischen Mittel der diskreten Zuschaltung, wie beispielsweise das Absperrorgan und die Drossel mit einem konstanten zweiten Strömungsquerschnitt, weisen eine hohe Ausfallsicherheit auf und haben geringere Beschaffungskosten als Expansionsventile mit einem stetig einstellbaren Strömungsquerschnitt. Somit kann ein effizienteres, robustes und ausfallsicheres System zur Zuführung eines Fluids zu einem Verdampfer einer Kältemaschine geschaffen werden.

Gemäß der vorliegenden Erfindung ist das Expansionsventil eingerichtet, den eingestellten ersten Strömungsquerschnitt zu messen und die Information über den gemessenen ersten Strömungsquerschnitt an die Steuereinheit zu übermitteln.

Gemäß einer weiteren beispielhaften Ausführungsform weist das System ferner eine Sensoreinrichtung auf. Die Sensoreinrichtung ist an dem Fluideingang und/oder an einem Fluidausgang des Verdampfers derart koppelbar, dass zumindest ein Zustandsparameter (Temperatur, Druck, Aggregatzustand und/oder Massenstrom des Fluids) am Fluideingang und/oder am Fluidausgang messbar ist. Die Sensoreinrichtung ist eingerichtet, den gemessenen Zustandsparameter des Fluids an die Steuereinheit zu übermitteln. Die Steuereinheit ist derart ausgebildet, dass in Abhängigkeit des Zustandsparameters das Expansionsventil und/oder das Absperrorgan steuerbar ist/sind. Mit anderen Worten kann die Steuereinheit in Abhängigkeit der gemessenen Zustandsparameter des Fluids den ersten Massenstrom und/oder den zweiten Massenstrom steuern, um eine gewünschte Kälteleistung und um einen gewünschten Aggregatzustand des Kältemittels insbesondere am Fluidausgang des Verdampfers einzustellen.

Mittels der vorliegenden Erfindung kann die gesamte Kühlleistung und der damit verbundene Bedarf an Kältemittel (Fluid) bereitgestellt werden, ohne ein größeres Expansionsventil zu benötigen oder mehrere komplex steuerbare Expansionsventile einzusetzen.

Gemäß einer weiteren beispielhaften Ausführungsform weist das Expansionsventil einen ersten KV-Wert auf und die Drossel weist einen zweiten KV-Wert auf. Der erste KV-Wert ist größer als der zweite KV-Wert ist.

Gemäß einer weiteren beispielhaften Ausführungsform können Bei einem höheren Bedarf an Kühlleistung mehrere weitere zweite Leitungen parallel zu der ersten Leitung gestaltet werden. Je nach Bedarf an Gesamtmassenstrom des Fluids am Fluideingang des Verdampfers können bedarfsweise mehrere weitere zweite Massenströme über mehrere weitere Absperrorgane zugeschaltet werden.

Mit anderen Worten kann das System gemäß einer weiteren beispielhaften Ausführungsform eine weitere zweite Leitung, welche an den Fluideingang des Verdampfers anschließbar ist, ein weiteres Absperrorgan, welches an die weitere zweite Leitung gekoppelt ist, und eine weitere Drossel mit einem weiteren konstanten Strömungsquerschnitt aufweisen.

Das weitere Absperrorgan ist derart steuerbar, dass in einer weiteren Öffnungsstellung des weiteren Absperrorgans ein weiterer zweiter Massenstrom des Fluids durch die weitere zweite Leitung strömt und in einer weiteren Schließstellung kein Fluid durch die weitere zweite Leitung strömt. Die weitere Drossel ist mit der weiteren zweiten Leitung derart gekoppelt, dass der weitere zweite Massenstrom in der weiteren Öffnungsstellung des weiteren Absperrorgans durch den weiteren zweiten Strömungsquerschnitt der weiteren zweiten Drossel durchführbar ist.

Die Steuereinheit ist derart eingerichtet, dass in Abhängigkeit des ersten Strömungsquerschnitts und des zweiten Strömungsquerschnitts das weitere Absperrorgan steuerbar ist.

Erreicht beispielsweise der erste Strömungsquerschnitt seinen Maximalwert und ist das Absperrorgan bereits in Öffnungsstellung und wird dennoch ein höherer Kältemittelbedarf im Verdampfer benötigt, so steuert die Steuereinheit das weitere Absperrorgan derart, dass dieses in die Öffnungsstellung bewegt wird. Gleichzeitig (bzw. mit einer bestimmten Vor- oder Nachhaltezeit) wird der erste Strömungsquerschnitt des Expansionsventils (z.B. um den Betrag des weiteren Strömungsquerschnitts des weiteren Absperrorgans) reduziert, um den Gesamtmassenstrom am Fluideingang während des Schaltvorgangs des weiteren Absperrorgans konstant zu halten.

Gemäß einem weiteren Aspekt des Verfahrens wird das Absperrorgan in die Öffnungsstellung gesteuert, wenn der erste Strömungsquerschnitt des Expansionsventils eine erste vorgegebene Querschnittsgröße (z.B. die maximale Querschnittsgröße) überschreitet. Ferner wird das Absperrorgan in die Schließstellung gesteuert, wenn der erste Strömungsquerschnitt des Expansionsventils eine zweite vorgegebene Querschnittsgröße (z.B. die minimale Querschnittsgröße) unterschreitet.

Die erste Querschnittsgröße und die zweite Querschnittsgröße stellen designbasierte oder effizientsbasierte vorgegebene Größen dar, bei welchen die Steuereinheit die jeweiligen Schaltvorgänge der Absperrhähne durchführt.

Gemäß einer weiteren beispielhaften Ausführungsform des Verfahrens ist die erste Querschnittsgröße größer als 70% einer maximalen Querschnittsgröße des ersten Strömungsquerschnitts des Expansionsventils. Zusätzlich oder alternativ kann die zweite Querschnittsgröße kleiner als 30% der maximalen Querschnittsgröße gewählt werden.

Mittels des oben beschriebenen System und dem Verfahren lässt sich die Ventilleistung einer Kältemaschine bedarfsweise erhöhen. Je nach Leistungsbedarf an Ventilleistung können mehrere zweite Leitungen (einschließlich zugehöriger Durchflussquerschnitte bzw. zweiter Strömungsquerschnitte entsprechender Absperrorgane und Drosseln) parallel zu der ersten Leitung hinzugeschaltet werden.

Mittels der vorliegenden Erfindung wird eine kostengünstige Lösung zur Zuführung eines Fluids zu einem Verdampfer bereitgestellt. Die Ventilleistung bzw. der Gesamtmassenstrom am Fluideingang des Verdampfers lässt sich beliebig ausbauen. Ferner können kleinere, preisgünstigere und robustere (elektrische) Expansionsventile eingesetzt werden, womit auch das Ausfallrisiko aufgrund des einfachen technischen Aufbaus reduziert wird. Aufgrund der schnellen Schaltgeschwindigkeit des Expansionsventils und des Absperrorgans und aufgrund der Trägheit der Regelstrecke des Fluids ist auch während der Schaltvorgänge zwischen Zu- und Abschalten des Absperrorgans eine hohe Regelgenauigkeit möglich. Gross dimensionierte Ventile haben ferner eine schlechte Auflösung im Teillastbereich (bei kleiner Leistung). Durch das Zuschalten mehrerer zweiter Leitungen wird die Auflösung des "kleinen" Expansionsventils in der ersten Leitung auf einen großen Leistungsbereich mittels der parallel zuschaltbaren zweiten Leitungen ausgedehnt und erhöht somit die Gesamtgenauigkeit.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung einer Ausführungsform der vorliegenden Erfindung;
Fig. 2 zeigt ein Diagramm, welches ein Steuerverfahren eines Systems mit einer zweiten parallelgeschalteten Leitung gemäß einer Ausführungsform der Erfindung darstellt; und
Fig. 3 zeigt ein Diagramm, welches ein Steuerverfahren eines Systems mit einer zweiten parallelgeschalteten Leitung und einer weiteren zweiten parallelgeschalteten Leitung gemäß einer weiteren bevorzugten Ausführungsform der Erfindung darstellt.

### Detaillierte Beschreibung von Ausführungsformen

Gleiche oder ähnliche Komponenten in der Figur sind mit gleichen Bezugsziffern versehen. Die Darstellung in der Figur ist schematisch.

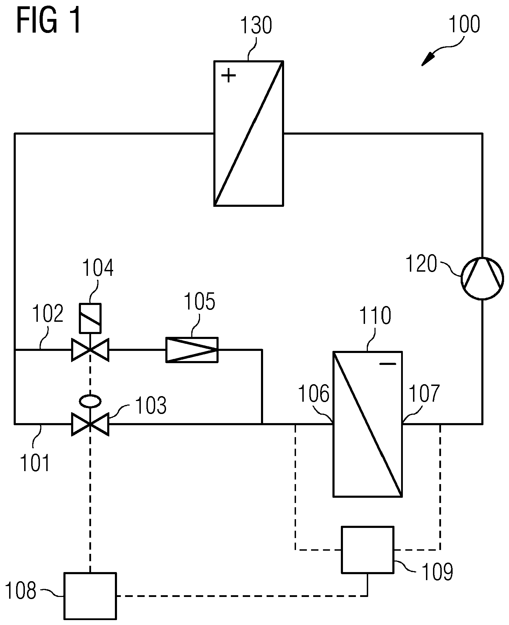

In der **Fig.** 1 wird eine Kältemaschine 100 dargestellt, welche einen Verdampfer 110, einen Verdichter 120 und einen Verflüssiger 130 aufweist. Vor dem Verdampfer 110 ist eine Drosseleinrichtung bestehend aus einer ersten Leitung 101 und zumindest einer zweiten Leitung 102, welche zu der ersten Leitung 101 parallel geschaltet ist, angeordnet.

Die durchgezogenen Linien in Fig. 1 zeigen Fluidleitungen der Kältemaschine 100 an. Die gestrichelten Linien zeigen Steuerleitungen bzw. Datenleitungen an.

Die erste Leitung und die zweite Leitung 102, welche parallel zur ersten Leitung 101 geschaltet ist, sind an dem Fluideingang 106 des Verdampfers 110 angeschlossen. Ein Expansionsventil 103, welches einen stetig einstellbaren ersten Strömungsquerschnitt aufweist, ist in der ersten Leitung 101 derart angeordnet, dass mittels des stetig änderbaren ersten Strömungsquerschnitts ein erster Massenstrom des Fluids in der ersten Leitung 101 stetig einstellbar ist. In der zweiten Leitung 102 sind ein Absperrorgan 104 und eine Drossel 105 mit einem konstanten zweiten Strömungsquerschnitt angeordnet. Das Absperrorgan 104 ist derart steuerbar, dass in einer Öffnungsstellung des Absperrorgans 104 ein zweiter Massenstrom des Fluids durch die zweite Leitung 102 strömt und in einer Schließstellung des Absperrorgans 104 kein Fluid durch die zweite Leitung 102 strömt bzw. ein Fluidstrom durch die zweite Leitung 102 unterbunden wird.

Die Drossel 105 ist in der zweiten Leitung 102 derart angeordnet, dass der zweite Massenstrom bei Öffnungsstellung des Absperrorgans 104 durch den zweiten Strömungsquerschnitt durchführbar ist. Eine Steuereinheit 108 steuert eine stetige Änderung des ersten Strömungsquerschnitts des Expansionsventils 103 und steuert in Abhängigkeit des ersten Strömungsquerschnitts die Öffnungsstellung bzw. die Schließstellung des Absperrorgans 104.

In dem Verdampfer 110 wird am Fluideingang 106 das Fluid mit vorbestimmten Zustandsparameter zur Verfügung gestellt. Die vorbestimmten Zustandsparameter am Fluideingang sind so gewählt, dass am Fluidausgang 107 nach Durchströmen des Verdampfers 110 das Fluid vollständig verdampft und überhitzt vorliegt. Eine Sensoreinrichtung 109 kann die Zustandsparameter, wie beispielsweise die Fluidtemperatur, den Druck, den Aggregatzustand und den Massenstrom des Fluids, am Fluideingang 106 und insbesondere am Fluidausgang 107 messen und die gemessenen Zustandsparameter der Steuereinheit 108 zur Verfügung stellen.

Die Regelgrösse ist mit anderen Worten die Überhitzung des Fluids am Fluidausgang 107. Die Überhitzung am Verdampfer 110 lässt sich auf verschiedene Weisen ermitteln. Meistens werden der Druck und die Temperatur am Fluidausgang 107 gemessen. Anschließend wird der Druck in Temperatur umgerechnet. Die Differenz beider Temperaturen bildet den Wert der Überhitzung. Alternativ kann statt dem Druck am Fluidausgang 107 eine zweite Temperatur am Fluideingang 106 gemessen werden. Mit Korrekturfaktoren multipliziert und kann daraus die Überhitzung berechnet werden. Auch besteht die Möglichkeit direkt den Nassdampfgehalt am Fluidausgang 107 zu messen.

Zusammenfassend beschreibt die Regelgröße den Zustand bzw. die Zustände am Fluidausgang 107. Die Sensoren der Sensoreinrichtung 109 können insbesondere am Fluidausgang 107 und/oder am Fluideingang 106 angeordnet sein.

Die Steuereinheit 108 kann in Abhängigkeit der gemessenen Sensordaten bzw. der gemessenen Zustandsparameter des Fluids am Fluideingang 106 und am Fluidausgang 107 den ersten Öffnungsquerschnitt des Expansionsventils 103 bedarfsweise stetig vergrößern oder verkleinern, so dass ein erster Massenstrom des Fluids in der ersten Leitung 101 und somit ein Gesamtmassenstrom am Fluideingang 106 entsprechend einstellbar ist.

Übersteigt der Bedarf des Gesamtmassenstroms den ersten Massenstrom, welcher bei einer ersten Querschnittsgröße (Maximalquerschnittsgröße) des ersten Strömungsquerschnitts vorliegt, so schaltet die Steuereinheit 108 das Absperrorgan 104 in Öffnungsstellung, so dass der zweite Massenstrom durch die Drossel 105 und die zweite Leitung 102 zu dem Fluideingang 106 strömt. Gleichzeitig bzw. mit einer Vor- oder Nachhaltezeit von z.B. ca. 0,01 bis ca. 1,5 Sekunden steuert die Steuereinheit 108 das Expansionsventil 103 derart, dass der erste Strömungsquerschnitt und somit auch der erste Massenstrom reduziert werden, so dass der Gesamtmassenstrom am Fluideingang 106 während des Schaltvorgangs des Absperrorgans 104 konstant bleibt.

Stellt die Steuereinheit 108 bzw. die Sensoreinrichtung 109 fest, dass ein höherer Gesamtmassenstrom am Fluideingang 106 benötigt wird, so steuert die Steuereinheit 108 stetig den ersten Strömungsquerschnitt des Expansionsventils, bis erneut die erste Querschnittsgröße des ersten Strömungsquerschnitts erreicht ist.

Ist erneut die erste Querschnittsgröße des Strömungsquerschnitts des Expansionsventils 103 erreicht, ist z.B. die maximale Ventilleistung der Kältemaschine erreicht oder ein weiteres Absperrorgan 104, welches an einer weiteren zweiten Leitung, die parallel zu der ersten Leitung 101 verläuft, gekoppelt ist, wird in Öffnungsstellung geschaltet, so dass ein weiterer zweiter Massenstrom durch die weitere zweite Leitung strömt. Gleichzeitig bzw. mit einer Vor- oder Nachhaltezeit von z.B. ca. 0,01 bis ca. 1,5 Sekunden wird wiederum der erste Strömungsquerschnitt reduziert, damit sich während des Schaltvorgangs des weiteren Absperrorgans der Gesamtmassenstrom am Fluideingang 106 nicht ändert und konstant bleibt.

In Fig. 1 sind zur besseren Übersicht die möglichen weiteren Absperrhähne, die weiteren zweiten Leitungen und weitere Drosseln nicht dargestellt.

Verringert sich der Bedarf an Kälteleistung, so muss beispielsweise auch der Gesamtmassenstrom am Fluideingang 106 reduziert werden. Fällt der Bedarf an dem Gesamtmassenstrom am Fluideingang 106 unter eine zweite Querschnittsgröße (z.B. minimale Querschnittsgröße des ersten Strömungsquerschnitts bzw. Schließstellung des Expansionsventils 103) des ersten Strömungsquerschnitts des Expansionsventils 103, so steuert die Steuereinheit 108 das Absperrorgan 104 in die Schließstellung und erhöht gleichzeitig bzw. mit einer bestimmten Vor- oder Nachhaltezeit den ersten Strömungsquerschnitt derart, dass der Gesamtmassenstrom am Fluideingang 106 während des Schaltvorgangs konstant bleibt. Verringert sich der Bedarf an Gesamtmassenstrom des Fluids am Fluideingang 106 weiter, wird der erste Strömungsquerschnitt des Expansionsventils 103 stetig reduziert, bis die Kältemaschine 100 deaktiviert ist oder ein weiteres Absperrorgan 104 in einer weiteren parallel zur ersten Leitung 101 geschalteten weiteren zweiten Leitung in die Schließstellung gesteuert wird.

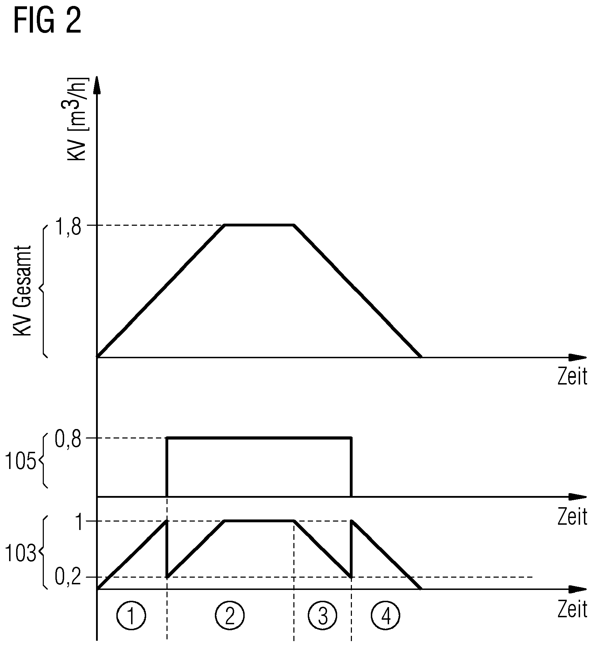

**Fig.** 2 zeigt ein Diagramm, welches ein Steuerverfahren eines Systems mit einer zweiten parallel geschalteten Leitung 102 gemäß einer beispielhaften Ausführungsform der Erfindung, wie beispielsweise in Fig. 1 dargestellt, zeigt.

Im Diagramm in Fig. 2 wird entlang der X-Achse (Abszisse) der Zeitverlauf dargestellt und entlang der Y-Achse (Ordinate) der KV-Wert bzw. der Durchflussfaktor in Kubikmeter pro Stunde (m³/h) angegeben. Dabei sind in dem Diagramm in Fig. 2 die KV-Wert-Verläufe des Expansionsventils 103 und der Drossel 105 sowie die Gesamtdurchflussmenge am Fluideingang 106 des Verdampfers 110, welche der Summe der Durchflussmengen bzw. der KV-Werte der ersten Leitung 101 (Expansionsventil 103) und der zweiten Leitung 102 (Drossel 105) entspricht, dargestellt.

Das in Fig. 2 dargestellte Expansionsventil 103 ist mit einem maximalen KV-Wert von 1 m³/h ausgelegt und die Drossel 105 ist mit einem maximalen KV-Wert von 0,8 m³/h beispielhaft ausgelegt. Die maximalen KV-Werte der einzelnen Drosseln 105 und/oder Expansionsventile 103 können in anderen Beispielen auch andere Werte aufweisen. In einer vorteilhaften Ausführungsform ist jedoch der maximale KV-Wert des Expansionsventils 103 größer als der maximale KV-Wert der Drossel 105.

Entlang der Zeitachse sind in Fig. 2 ferner vier Betriebszustände dargestellt. Im Betriebszustand 1 steigt die Durchflussmenge (m³/h) bis der maximalen KV-Wert des Expansionsventils 103 (in Fig. 2 KV = 1 m³/h) erreicht wird. Ist mehr Durchflussmenge des Fluids bzw. des Kältemittels notwendig, wird das Absperrorgan 104 in die Öffnungsstellung geschaltet, so dass durch die Drossel 105 entsprechend ihres maximalen KV-Wertes eine entsprechende Durchflussmenge an Fluid dem nachgeschalteten Verdampfer 110 über die zweite Leitung 102 zugeführt wird. Zudem wird an dem Zuschaltzeitpunkt des Absperrorgans 104 zwischen Betriebszustand 1 und 2 der erste Strömungsquerschnitt des Expansionsventils 103 reduziert, bis durch das Expansionsventil 103 eine Durchflussmenge bzw. ein KV-Wert von 0,2 m³/h (Ergebnis aus KV = 1 m³/h = maximaler KV-Wert des Expansionsventils 103 - KV = 0,8 m³/h = maximaler KV-Wert der Drossel 105) eingestellt ist. Wie an dem in Fig. 2 dargestellten Gesamt-KV-Wert gezeigt, ist bei Übergang von Betriebszustand 1 zu Betriebszustand 2 kein sprunghafter Anstieg der Gesamtdurchflussmenge verursacht.

Da auch im Umschaltpunkt zwischen Betriebszustand 1 und Betriebszustand 2 das Expansionsventil 103 mit einem KV-Wert von 0,2 m³/h betrieben wird, weist das Expansionsventil 103 einen Pufferbereich in Höhe von 0,2 m³/h auf, so dass ein permanentes Zu- und Abschalten des Absperrorgans 104 bzw. der zweiten Leitung 102 verhindert wird. Beispielsweise kann bei einem abnehmenden Bedarf an Durchflussmenge des Kältemittels der KV-Wert des Expansionsventils 103 von 0,2 m³/h auf bis zu 0,0 m³/h reduziert werden, bis das Absperrorgan 104 erneut in Schließstellung gestellt wird. Mit anderen Worten kann der Gesamt-KV-Wert konstant gehalten werden und ein permanentes zu- und abschalten des Absperrorgans 104 verhindert werden, auch falls der Bedarf zwischen 0,8 m³/h und 1 m³/h schwankt.

In Betriebszustand 2 steigt der Bedarf an Kältemittel, so dass das Expansionsventil 103 bis auf den Maximalwert von KV = 1 m³/h eingestellt wird. In Betriebszustand 3 reduziert sich erneut der Bedarf an Kältemittel, so dass der KV-Wert des Expansionsventils 103 reduziert wird, bis KV = 0,2 m³/h erreicht wird. Im Übergang zwischen Betriebszustand 3 und Betriebszustand 4 wird erneut das Absperrorgan 104 in Schließstellung gebracht, so dass der KV-Wert der Drossel 105 von 0,8 m³/h auf 0 m³/h sinkt. Dementsprechend wird der KV-Wert des Expansionsventils 103 von KV = 0,2 m³/h auf KV = 1 m³/h erhöht. Wie in Fig. 2 dargestellt, bleibt im Übergang zwischen Betriebszustand 3 und Betriebszustand 4 der Gesamt-KV-Wert konstant.

Nimmt der Bedarf an Kühlmittel weiter ab, wird der KV-Wert des Expansionsventils 103 stetig bis auf beispielsweise KV = 0 m³/h reduziert.

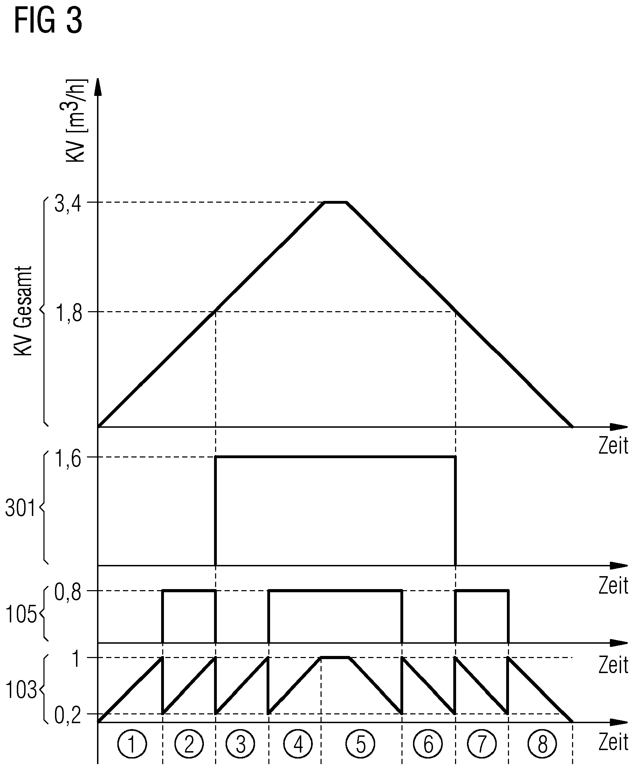

Fig. 3 zeigt ein weiteres Diagramm, welches ein Steuerverfahren eines Systems mit einer zweiten parallel geschalteten Leitung 102 und einer weiteren zweiten parallel geschalteten Leitung gemäß einer weiteren beispielhaften Ausführungsform der Erfindung darstellt. In Fig. 3 werden zum besseren Verständnis dieselben maximalen KV-Werte für das Expansionsventil 103 und die Drossel 105 verwendet. Je nach Auslegung des Systems und der einzelnen Ventile sind auch andere (maximale) KV-Werte vorgebbar und anwendbar.

Die Betriebszustände 1 und 2 entsprechen denselben Betriebszuständen wie in Fig. 2 dargestellt und oben erläutert.

In dem Übergang zwischen Betriebszustand 2 und Betriebszustand 3 wird eine weitere zweite Drossel 301 zugeschaltet. Gleichzeitig wird das Absperrorgan 104 abgeschaltet, so dass der KV-Wert der Drossel 105 und in der zweiten Leitung 102 auf 0 m³/h sinkt. Das Expansionsventil 103 reduziert seinen KV-Wert auf 0,2 m³/h. Der Gesamt-KV-Wert bzw. der Gesamtmassenstrom, der an dem Verdampfer 110 am Fluideingang 106 anliegt, beträgt somit 1,8 m³/h (ergibt sich aus 0,2 m³/h (KV-Wert des Expansionsventils 103) + 1,6 m³/h (KV-Wert der weiteren Drossel 301)).

Das System, dessen Steuerverfahren in Fig. 3 in dem Diagramm dargestellt wird, weist die zweite Leitung 102 und eine weitere zweite Leitung auf. In jeder der zweiten Leitungen 102 kann über ein entsprechendes Absperrorgan 104 diskret eine zusätzliche Durchflussmenge des Kältemittels entsprechend dem maximalen KV-Wert der entsprechenden Drossel 105 hinzugefügt werden. Gleichzeitig wird bei jeder Zu- und Abschaltung eines entsprechenden Absperrorgans 104 ein Pufferbereich des Expansionsventils 103 von z.B. KV-Wert = 0,2 m³/h beibehalten. Somit wird ein permanentes Umschalten zwischen den Betriebszuständen unterbunden, falls der Bedarf an Durchflussmenge des Kältemittels sich in einem Grenzbereich der Umschaltpunkte befindet.

Um einen Pufferbereich in dem in Fig. 3 im Diagramm dargestellten Ausführungsbeispiel bereitzustellen, kann die weitere Drossel einen maximalen KV-Wert aufweisen, welcher KV-Wert kleiner als die Summe des maximalen KV-Werts des Expansionsventils 103 und des maximalen KV-Werts der Drossel 105 ist. Zudem muss die Drossel 105 in der ersten Leitung 101 einen kleineren KV-Wert aufweisen als das Expansionsventil 103 in der ersten Leitung 101.

In dem Betriebszustand 3 wird der KV-Wert des Expansionsventils 103 erneut bis auf 1m³/h erhöht. Steigt der Bedarf an Kältemittel am Fluideingang 106 des Verdampfers 110 weiter, wird beim Übergang des Betriebszustands 3 zu Betriebszustand 4 die Drossel 105 der zweiten Leitung 102 mittels des Absperrorgans 104 zugeschaltet und der KV-Wert des Expansionsventils 103 auf 0,2m³/h reduziert. Steigt der Bedarf an Kältemittel am Verdampfer 110 weiter, erhöht sich der KV-Wert des Expansionsventils 103 weiter bis zu seinem maximalen Wert auf 1 m³/h. Im Betriebszustand 5 ist die maximale Durchflussmenge des in Fig. 3 dargestellten Systems dargestellt. Wie an der Steigung des Gesamt-KV-Werts zu sehen, ist ein konstanter Anstieg von 0 m³/h bis zum maximalen KV-Wert = 3,4 m³/h umsetzbar.

In den Betriebszuständen 5 bis 8 wird die Reduzierung des Gesamt-KV-Wertes von 3,4 m³/h auf 0 m³/h dargestellt. Zwischen den Betriebszuständen 5 und 6 wird die Drossel 105 abgeschaltet. Zwischen den Betriebszuständen 6 und 7 wird die Drossel 105 erneut zugeschaltet und die weitere Drossel 301 abgeschaltet. Zwischen den Betriebszuständen 7 und 8 wird die Drossel 105 abgeschaltet und im Betriebszustand 8 wird der KV-Wert des Expansionsventils 103 schließlich bis auf 0 m³/h reduziert.

### Bezugszeichenliste

- 100: Kältemaschine
- 101: erste Leitung
- 102: zweite Leitung
- 103: Expansionsventil
- 104: Absperrorgan
- 105: Drossel
- 106: Fluideingang
- 107: Fluidausgang
- 108: Steuereinheit
- 109: Sensoreinrichtung

- 110: Verdampfer
- 120: Verdichter
- 130: Verflüssiger

- 301: weitere Drossel

## Patentansprüche

1. System zur Zuführung eines Fluids zu einem Verdampfer (110) einer Kältemaschine (100), das System aufweisend
eine erste Leitung (101), welche an einem Fluideingang (106) des Verdampfers (110) anschließbar ist,
eine zweite Leitung (102), welche an dem Fluideingang (106) des Verdampfers (110) anschließbar ist,
ein Expansionsventil (103) mit einem stetig änderbaren ersten Strömungsquerschnitt,
wobei das Expansionsventil (103) in der ersten Leitung (101) derart angeordnet ist, dass mittels des stetig änderbaren ersten Strömungsquerschnitts ein erster Massenstrom des Fluids durch die erste Leitung (101) stetig einstellbar ist,
ein Absperrorgan (104), welches in der zweiten Leitung (102) angeordnet ist,
wobei das Absperrorgan (104) diskret zwischen einer Öffnungsstellung und einer Schließstellung schaltbar ist,
wobei in der Öffnungsstellung des Absperrorgans (104) ein zweiter Massenstrom des Fluids durch die zweite Leitung (102) durchführbar ist und in der Schließstellung des Absperrorgans (104) ein Fluidstrom durch die zweite Leitung (102) unterbunden ist,
eine Drossel (105) mit einem konstanten zweiten Strömungsquerschnitt,
wobei die Drossel (105) in der zweiten Leitung (102) derart angeordnet ist, dass der zweite Massenstrom bei Öffnungsstellung des Absperrorgans (104) durch den zweiten Strömungsquerschnitt durchführbar ist, und
eine Steuereinheit (108), welche derart eingerichtet ist, dass eine stetige Änderung des ersten Strömungsquerschnitts des Expansionsventils (103) steuerbar ist,
wobei die Steuereinheit (108) derart eingerichtet ist, dass in Abhängigkeit des ersten Strömungsquerschnitts das Absperrorgan (104) derart steuerbar ist, dass in der Öffnungsstellung des Absperrorgans (104) der zweite Massenstrom des Fluids durch die zweite Leitung (102) strömt und in der Schließstellung des Absperrorgans (104) der Fluidstrom durch die zweite Leitung (102) unterbunden wird, **dadurch gekennzeichnet, dass** das Expansionsventil (103) eingerichtet ist, den eingestellten ersten Strömungsquerschnitt zu messen und die Information über den gemessenen ersten Strömungsquerschnitt an die Steuereinheit (108) zu übermitteln, und das Expansionsventil (103) eine Induktionsmesseinrichtung aufweist, wobei die Induktionsmesseinrichtung mittels Induktionsmessung den ersten Strömungsquerschnitt des Expansionsventils (103) misst.

2. System nach Anspruch 1, eine Sensoreinrichtung (109),
wobei die Sensoreinrichtung (109) an dem Fluideingang (106) und/oder an einem Fluidausgang (107) des Verdampfers (110) derart koppelbar ist, dass zumindest ein Zustandsparameter des Fluids am Fluideingang (106) und/oder am Fluidausgang (107) messbar ist,
wobei die Sensoreinrichtung (109) eingerichtet ist, den gemessenen Zustandsparameter an die Steuereinheit (108) zu übermitteln, und
wobei die Steuereinheit (108) derart ausgebildet ist, dass in Abhängigkeit des Zustandsparameters das Expansionsventil (103) und/oder das Absperrorgan (104) steuerbar ist.

3. System nach einem der Ansprüche 1 bis 2, wobei das Absperrorgan (104) ein Magnetventil aufweist.

4. System nach einem der Ansprüche 1 bis 3, wobei das Expansionsventil (103) ein elektromechanisch ausgebildetes Ventil ist, welches insbesondere einen Piezoaktuator aufweist.

5. System nach einem der Ansprüche 1 bis 4, wobei das Expansionsventil (103) einen ersten KV-Wert aufweist,
wobei die Drossel (105) einen zweiten KV-Wert aufweist, und
wobei der erste KV-Wert größer als der zweite KV-Wert ist.

6. System nach einem der Ansprüche 1 bis 5, ferner aufweisend
eine weitere zweite Leitung, welche an den Fluideingang (106) des Verdampfers (110) anschließbar ist,
ein weiteres Absperrorgan, welches in der weiteren zweiten Leitung angeordnet ist,
wobei das weitere Absperrorgan diskret zwischen einer weiteren Öffnungsstellung und einer weiteren Schließstellung schaltbar ist,
wobei in der weiteren Öffnungsstellung des weiteren Absperrorgans ein weiterer zweiter Massenstrom des Fluids durch die weitere zweite Leitung durchführbar ist und in der weiteren Schließstellung ein Fluidstrom durch die weitere zweite Leitung unterbrochen ist,
eine weitere Drossel mit einem konstanten weiteren Strömungsquerschnitt,
wobei die weitere Drossel in der weiteren zweiten Leitung derart angeordnet ist, dass der weitere Massenstrom in der weiteren Öffnungsstellung des weiteren Absperrorgans durch den weiteren Strömungsquerschnitt durchführbar ist,
wobei die Steuereinheit (108) derart eingerichtet ist, dass in Abhängigkeit des ersten Strömungsquerschnitts und des zweiten Strömungsquerschnitt das weitere Absperrorgan steuerbar ist.

7. Verfahren zur Zuführung eines Fluids zu einem Verdampfer (110) einer Kältemaschine (100), das Verfahren aufweisend
Steuern eines ersten Massenstroms des Fluids in einer ersten Leitung (101), welche an einem Fluideingang (106) des Verdampfers (110) angeschlossen ist, mittels stetigen Änderns eines ersten Strömungsquerschnitts eines Expansionsventils (103), welches in der ersten Leitung (101) angeordnet ist,
Steuern eines Absperrorgans (104), welches in einer zweiten, an dem Fluideingang (106) gekoppelten Leitung angeordnet ist, derart, dass in einer Öffnungsstellung des Absperrorgans (104) ein zweiter Massenstrom des Fluids durch die zweite Leitung (102) strömt und in einer Schließstellung ein Fluidstrom durch die zweite Leitung (102) unterbunden wird, wobei eine Drossel (105) mit einem konstanten zweiten Strömungsquerschnitt in der zweiten Leitung (102) derart angeordnet ist, dass der zweite Massenstrom bei Öffnungsstellung des Absperrorgans (104) durch den zweiten Strömungsquerschnitt strömt, wobei das Absperrorgan (104) gesteuert wird,
wobei das Absperrorgan (104) in Abhängigkeit des ersten Strömungsquerschnitts des Expansionsventils (103) derart gesteuert wird, dass in der Öffnungsstellung des Absperrorgans (104) der zweite Massenstrom des Fluids durch die zweite Leitung (102) strömt und in der Schließstellung des Absperrorgans (104) der Fluidstrom durch die zweite Leitung (102) unterbunden wird,
**dadurch gekennzeichnet, dass**
das Expansionsventil (103) eingerichtet ist, den eingestellten ersten Strömungsquerschnitt zu messen und die Information über den gemessenen ersten Strömungsquerschnitt an die Steuereinheit (108) zu übermitteln, und
das Expansionsventil (103) eine Induktionsmesseinrichtung aufweist, wobei die Induktionsmesseinrichtung mittels Induktionsmessung den ersten Strömungsquerschnitt des Expansionsventils (103) misst.

8. Verfahren nach Anspruch 7, wobei das Absperrorgan (104) in die Öffnungsstellung gebracht wird, wenn der erste Strömungsquerschnitt des Expansionsventils (103) eine erste Querschnittsgröße überschreitet, und
wobei das Absperrorgan (104) in die Schließstellung gebracht wird, wenn der erste Strömungsquerschnitt des Expansionsventils (103) eine zweite Querschnittsgröße unterschreitet.

## Claims

1. System for supplying a fluid to an evaporator (110) of a refrigeration unit (100), the system having
a first conduit (101), which can be connected to a fluid inlet (106) of the evaporator (110),
a second conduit (102), which can be connected to the fluid inlet (106) of the evaporator (110),
an expansion valve (103) with a continuously modifiable first flow cross section,
wherein the expansion valve (103) is disposed in the first conduit (101) in such a manner that the continuously modifiable first flow cross section can be used to set a first mass flow of the fluid through the first conduit (101) continuously,
a shut-off device (104), which is disposed in the second conduit (102),
wherein the shut-off device (104) can be switched discretely between an open position and a closed position,
wherein a second mass flow of the fluid can be conveyed through the second conduit (102) when the shut-off device (104) is in the open position and a fluid flow through the second conduit (102) is prevented when the shut-off device (104) is in the closed position,
a throttle (105) with a constant second flow cross section,
wherein the throttle (105) is disposed in the second conduit (102) in such a manner that the second mass flow can be conveyed through the second flow cross section when the shut-off device (104) is in the open position, and
a control unit (108), which is set up so that a continuous modification of the first flow cross section of the expansion valve (103) can be controlled wherein the control unit (108) is set up such that the shut-off device (104) can be controlled as a function of the first flow cross section such that when the shut-off device (104) is in the open position the second mass flow of the fluid flows through the second conduit (102) and when the shut-off device (104) is in the closed position the fluid flow through the second conduit (102) is prevented, **characterised in that** the expansion valve (103) is set up to measure the set first flow cross section and to transfer information about the measured first flow cross section to the control unit (108), and the expansion valve (103) has an induction measuring facility,
wherein the induction measuring facility measures the first flow cross section of the expansion valve (103) by means of induction measurement.

2. System according to claim 1,
a sensor facility (109),
wherein the sensor facility (109) can be coupled to the fluid inlet (106) and/or a fluid outlet (107) of the evaporator (110) in such a manner that at least one state parameter of the fluid can be measured at the fluid inlet (106) and/or at the fluid outlet (107),
wherein the sensor facility (109) is set up to transfer the measured state parameter to the control unit (108), and
wherein the control unit (108) is configured in such a manner that the expansion valve (103) and/or the shut-off device (104) can be controlled as a function of the state parameter.

3. System according to one of claims 1 to 2,
wherein the shut-off device (104) has a solenoid valve.

4. System according to one of claims 1 to 3,
wherein the expansion valve (103) is an electromechanically configured valve, which in particular has a piezo actuator.

5. System according to one of claims 1 to 4,
wherein the expansion valve (103) has a first kV value, wherein the throttle (105) has a second kV value, and
wherein the first kV value is greater than the second kV value.

6. System according to one of claims 1 to 5, also having
a further second conduit, which can be connected to the fluid inlet (106) of the evaporator (110),
a further shut-off device, which is disposed in the further second conduit,
wherein the further shut-off device can be switched discretely between a further open position and a further closed position, wherein when the further shut-off device is in the further open position, a further second mass flow of the fluid can be conveyed through the further second conduit and when it is in the further closed position a fluid flow through the further second conduit is interrupted,
a further throttle with a constant further flow cross section,
wherein the further throttle is disposed in the further second conduit in such a manner that the further mass flow can be conveyed through the further flow cross section when the further shut-off device is in the further open position,
wherein the control unit (108) is set up in such a manner that the further shut-off device can be controlled as a function of the first flow cross section and the second flow cross section.

7. Method for supplying a fluid to an evaporator (110) of a refrigeration unit (100), the method involving
controlling a first mass flow of the fluid in a first conduit (101), which is connected to a fluid inlet (106) of the evaporator (110), by continuously modifying a first flow cross section of an expansion valve (103), which is disposed in the first conduit (101),
controlling a shut-off device (104), which is disposed in a second conduit coupled to the fluid inlet (106), in such a manner that when the shut-off device (104) is in the open position, a second mass flow of the fluid flows through the second conduit (102) and when it is in the closed position a fluid flow through the second conduit (102) is prevented, with a throttle (105) with a constant second flow cross section being disposed in the second conduit (102) in such a manner that the second mass flow flows through the second flow cross section when the shut-off device (104) is in the open position,
wherein the shut-off device (104) is controlled as a function of the first flow cross section of the expansion valve (103) such that when the shut-off device (104) is in the open position the second mass flow of fluid flows through the second conduit (102) and when the shut-off device (104) is in the closed position the fluid flow through the second conduit (102) is prevented, **characterised in that**
the expansion valve (103) is set up to measure the first flow cross section and transfer information about the measured first flow cross section to the control unit (108), and
the expansion valve (103) has an induction measuring device, wherein the induction measuring device measures the first flow cross section of the expansion valve (103) by means of induction measurement.

8. Method according to claim 7,
wherein the shut-off device (104) is moved to the open position, when the first flow cross section of the expansion valve (103) exceeds a first cross section size, and
wherein the shut-off device (104) is moved to the closed position, when the first flow cross section of the expansion valve (103) drops below a second cross section size.

## Revendications

1. Système pour acheminer un fluide jusqu'à un évaporateur (110) d'une machine frigorifique (100), le système comprenant :
une première conduite (101) qui peut être raccordée à une entrée de fluide (106) de l'évaporateur (110),
une seconde conduite (102) qui peut être raccordée à l'entrée de fluide (106) de l'évaporateur (110),
une soupape de détente (103) ayant une première section transversale d'écoulement modifiable en continu,
dans lequel la soupape de détente (103) est agencée dans la première conduite (101) de telle manière qu'un premier débit massique du fluide à travers la première conduite (101) est réglable en continu au moyen de la première section transversale d'écoulement modifiable en continu, un organe d'arrêt (104) qui est disposé dans la seconde conduite (102),
dans lequel l'organe d'arrêt (104) est commutable de façon discrète entre une position ouverte et une position fermée, et, dans la position ouverte de l'organe d'arrêt (104), un second débit massique du fluide passant à travers la seconde conduite (102) peut être produit et, dans la position fermée de l'organe d'arrêt (104), un écoulement de fluide à travers la seconde conduite (102) est interrompu,
un étranglement (105) ayant une seconde section transversale d'écoulement constante,
dans lequel l'étranglement (105) est agencé dans la seconde conduite (102) de telle manière que le second débit massique à travers la seconde section transversale d'écoulement peut être produit, en position ouverte de l'organe d'arrêt (104), et
un module de commande (108) qui est configuré de telle manière qu'une modification continuelle de la première section transversale d'écoulement de la soupape de détente (103) peut être commandée,
dans lequel le module de commande (108) est configuré de telle manière que l'organe d'arrêt (104) peut être commandé en fonction de la première section transversale d'écoulement de manière à ce qu'en position ouverte de l'organe d'arrêt (104), le second débit massique du fluide s'écoule à travers la seconde conduite (102) et que dans la position fermée de l'organe d'arrêt (104), l'écoulement de fluide à travers la seconde conduite (102) soit stoppé, **caractérisé en ce que** la soupape de détente (103) est configurée de manière à mesurer la première section transversale d'écoulement réglée et à transmettre des informations sur la première section transversale d'écoulement mesurée au module de commande (108), et la soupape de détente (103) comprend un dispositif de mesure d'induction, lequel dispositif de mesure d'induction mesure la première section transversale d'écoulement de la soupape de détente (103) par une mesure d'induction.

2. Système selon la revendication 1, comprenant un dispositif de capteur (109),
dans lequel le dispositif de capteur (109) peut être couplé à l'entrée de fluide (106) et/ou à une sortie de fluide (107) de l'évaporateur (110) de manière à pouvoir mesurer au moins un paramètre d'état du fluide à l'entrée de fluide (106) et/ou à la sortie de fluide (107),
dans lequel le dispositif de capteur (109) est configuré de manière à transmettre le paramètre d'état mesuré au module de commande (108), et
dans lequel le module de commande (108) est configuré de telle manière que la soupape de détente (103) et/ou l'organe d'arrêt (104) peuvent être commandés en fonction du paramètre d'état.

3. Système selon l'une des revendications 1 à 2, dans lequel l'organe d'arrêt (104) comprend une électrovanne.

4. Système selon l'une des revendications 1 à 3, dans lequel la soupape de détente (103) est une soupape électromécanique, qui comprend notamment un actionneur piézoélectrique.

5. Système selon l'une des revendications 1 à 4, dans lequel la soupape de détente (103) a un premier coefficient de débit Kv,
dans lequel l'étranglement (105) a un second coefficient de débit Kv, et
dans lequel le premier coefficient de débit Kv est supérieur au second coefficient de débit Kv.

6. Système selon l'une des revendications 1 à 5, comprenant en outre
une seconde conduite supplémentaire, qui peut être raccordée à l'entrée de fluide (106) de l'évaporateur (110),
un organe d'arrêt supplémentaire, qui est agencé dans la seconde conduite supplémentaire,
dans lequel l'organe d'arrêt supplémentaire peut être commuté de façon discrète entre une position ouverte supplémentaire et une position fermée supplémentaire,
dans lequel, dans la position ouverte supplémentaire de l'organe d'arrêt supplémentaire, un second débit massique supplémentaire du fluide peut être produit à travers la seconde conduite supplémentaire, et dans la position fermée supplémentaire, un écoulement de fluide à travers la seconde conduite supplémentaire est interrompu,
un étranglement supplémentaire ayant une section transversale d'écoulement supplémentaire constante,
dans lequel l'étranglement supplémentaire est agencé dans la seconde conduite supplémentaire de telle manière que le débit massique supplémentaire peut être produit, dans la position ouverte supplémentaire de l'organe d'arrêt supplémentaire, à travers la section transversale d'écoulement supplémentaire, et
dans lequel le module de commande (108) est configuré de telle manière que l'organe d'arrêt supplémentaire peut être commandé en fonction de la première section transversale d'écoulement et de la seconde section transversale d'écoulement.

7. Procédé pour acheminer un fluide jusqu'à un évaporateur (110) d'une machine frigorifique (100), comprenant :
la commande d'un premier débit massique du fluide dans une première conduite (101), qui est raccordée à une entrée de fluide (106) de l'évaporateur (110), au moyen d'une variation continue d'une première section transversale d'écoulement d'une soupape de détente (103) agencée dans la première conduite (101),
la commande d'un organe d'arrêt (104), qui est agencé dans une seconde conduite accouplée à l'entrée de fluide (106), de manière à ce que, dans une position ouverte de l'organe d'arrêt (104), un second débit massique du fluide s'écoule à travers la seconde conduite (102) et, dans une position fermée, un écoulement de fluide à travers la seconde conduite (102) soit stoppé, dans lequel un étranglement (105) ayant une seconde section transversale d'écoulement constante est agencé dans la seconde conduite (102) de telle manière que le second débit massique s'écoule, en position ouverte de l'organe d'arrêt (104), à travers la seconde section transversale d'écoulement, dans lequel l'organe d'arrêt (104) est commandé, et
dans lequel l'organe d'arrêt (104) est commandé en fonction de la première section transversale d'écoulement de la soupape de détente (103) de telle manière que, dans la position ouverte de l'organe d'arrêt (104), le second débit massique du fluide s'écoule à travers la seconde conduite (102) et, dans la positon fermée de l'organe d'arrêt (104), l'écoulement de fluide à travers la seconde conduite (102) est stoppé,
**caractérisé en ce que**
la soupape de détente (103) est configurée pour mesurer la première section transversale d'écoulement réglée et pour transmettre les informations sur la première section transversale d'écoulement mesurée au module de commande (108), et
la soupape de détente (103) comprend un dispositif de mesure d'induction, lequel dispositif de mesure d'induction mesure la première section transversale d'écoulement de la soupape de détente (103) au moyen d'une mesure d'induction.

8. Procédé selon la revendication 7, dans lequel l'organe d'arrêt (104) est mis en position ouverte lorsque la première section transversale d'écoulement de la soupape de détente (103) devient supérieure à une première dimension de section transversale, et
dans lequel l'organe d'arrêt est mis dans la position fermée lorsque la première section transversale d'écoulement de la soupape de détente (103) devient inférieure à une seconde dimension de section transversale.
